# FASCICULE DE BREVET EUROPEEN

(11) **EP 2 071 798 B1**
(45) Date de publication et mention de la délivrance du brevet: **21.08.2019**
(21) Numéro de dépôt: 08171113.7
(22) Date de dépôt: 09.12.2008
(51) Int. Cl.: G06F 21/62, H04L 29/06

(54) **Procédé et serveur de coffres-forts électroniques avec mutualisation d'informations**
Verfahren und Server für elektronische Safes mit Informationsbündelung
Method and server of electronic strongboxes with information sharing

(30) Priorité: 10.12.2007 FR 0759696
(43) Date de publication de la demande: 17.06.2009
(73) Titulaire: Be Invest International S.A., 8009 Strassen (LU)
(72) Inventeur: Chochois, Michaël, 35510, CESSON-SEVIGNE (FR); Jadeau, Guillaume, 63430, PONT-DU-CHATEAU (FR)
(74) Mandataire: Cabinet Plasseraud

(56) Documents cités:
- WO-A-02/103496
- WO-A-03/009111
- US-A1- 2005 203 885

## Description

La présente invention concerne le domaine des coffres-forts électroniques.

Les coffres-forts électroniques correspondent à des espaces de stockage, à accès sécurisé, de données électroniques. Ils offrent une solution aux administrations, entreprises et aux particuliers pour stocker sous forme électronique des contenus divers, par exemple des bulletins de salaires, des relevés de comptes bancaires, des contrats d'assurance, des photos, etc. (cf. par exemple le site www.e-coffrefort.fr).

De tels coffres-forts électroniques sont généralement créés, puis gérés, par l'intermédiaire d'un serveur appartenant à un tiers de confiance et accessible depuis un grand nombre de terminaux (ordinateurs, téléphones mobiles, avec connexion WAP ou Internet, etc.) par les utilisateurs des coffres-forts électroniques.

Le coffre-fort électronique comprend généralement des répertoires électroniques, appelés classeurs. Quand une entreprise ou une administration ouvre un coffre-fort pour un utilisateur, elle lui fournit un module de sécurité, par exemple matériel (carte à puce, support USB muni d'un crypto-processeur (en anglais nommé notamment « *token* » ou encore « *dongle* » USB), etc.), ayant des moyens de stockage notamment de données d'accès. Lorsque l'utilisateur souhaite accéder au coffre-fort électronique, une étape d'authentification de l'utilisateur est réalisée par le serveur par l'intermédiaire du module de sécurité et d'un terminal adapté pour communiquer avec le serveur.

L'étape d'authentification comprend généralement la lecture des données d'accès depuis le module de sécurité pour permettre l'authentification du porteur et autoriser ou non l'accès à un coffre-fort électronique.

Le document WO 03/009111 décrit un exemple de procédé de gestion d'un coffre-fort électronique où l'utilisateur est authentifié par des moyens biométriques et dans lequel l'utilisateur doit passer par une unique entité « SP CRM System » pour s'authentifier auprès d'un unique coffre-fort électronique.

Parmi les classeurs compris dans un coffre-fort électronique, un classeur est généralement dédié au stockage de données personnelles de l'utilisateur : coordonnées, état civil, et plus généralement tout autre fichier ou élément électronique personnel qu'il souhaite archiver de manière sécurisée.

Un utilisateur peut bénéficier de plusieurs coffres-forts électroniques : un coffre-fort offert par son employeur, un autre par sa banque et/ou son assurance, une administration, etc.

A chaque fois qu'un coffre-fort électronique est créé, l'utilisateur bénéficie donc d'un nouveau classeur dédié à ses données personnelles.

Par exemple, une entreprise E1 offre un coffre-fort électronique cf1 à un de ses employés. Le coffre-fort électronique est ouvert au nom de cet employé, les coordonnées personnelles de l'employé sont enregistrées dans le classeur *« données personnelles* »*.*

Pour accéder à ce coffre-fort, l'entreprise a remis à l'employé une carte à puce (ou un support USB muni d'un crypto-processeur) comportant le logo et le nom de l'entreprise, etc.

Dans un second temps, l'employé se voit offrir un second coffre-fort électronique cf2 par une autre entreprise (sa banque, son assurance) ou administration E2. Ce second coffre-fort est également ouvert avec le nom de l'employé.

A cet instant, aucun lien n'existe entre les deux coffres-forts par le serveur qui les gère indépendamment l'un de l'autre. La probabilité de l'existence d'un homonyme, la nature confidentielle des données enregistrées dans ces coffres (données personnelles, données médicales, fiches de salaire, coordonnées bancaires, etc.), le risque lié à une fraude, interdisent le rapprochement de ces deux coffres sur des critères usuels tels que le nom et les coordonnées personnelles.

Les inventeurs ont ainsi constaté un besoin de pouvoir effectuer un rapprochement entre des coffres-forts électroniques attribués à un même utilisateur, éventuellement par l'intermédiaire d'entreprises ou administrations différentes, et cela sans introduire de brèche dans la sécurisation des informations. Suivant un premier aspect, l'invention propose un procédé de gestion de coffres-forts électroniques mis en oeuvre par un serveur pour le compte d'au moins un utilisateur possédant au moins un premier coffre-fort électronique.

Ce procédé comprend une étape de mise en oeuvre de moyens d'accès conçus pour fournir audit utilisateur un accès, via un deuxième coffre-fort appartenant audit utilisateur, à un ensemble de données faisant partie d'un contenu accessible via le premier coffre-fort électronique, ladite étape de mise en oeuvre étant destinée à être exécutée en cas d'authentification dudit utilisateur en tant qu'utilisateur propriétaire du premier coffre-fort électronique.

Le rapprochement entre coffres-forts permet de partager, entre différents coffres-forts électroniques détenus par un même utilisateur, un même ensemble de données, c'est-à-dire de permettre un accès à ce même ensemble de données via deux coffres-forts ou plus. Les données partagées sont par exemple des données personnelles auxquelles l'utilisateur souhaite pouvoir accéder systématiquement, à chaque demande d'accès à l'un quelconque de ses coffres-forts.

Dans une variante de réalisation, l'étape de mise en oeuvre est exécutée suite à une réception par le serveur d'une requête de création pour ledit utilisateur du deuxième coffre-fort électronique. La mutualisation de données est donc effectuée au plus tôt. Dans une autre variante, cette étape est exécutée suite à une demande d'accès à un deuxième coffre-fort électronique déjà créé.

Dans un mode de réalisation, le procédé comprend une étape d'authentification dudit utilisateur au moyen de données d'authentification d'utilisateur utilisées pour authentifier ledit utilisateur en cas de requête d'accès au premier coffre-fort.

Les données d'authentification fournies sont par exemple une signature électronique de l'utilisateur indiquant une clé secrète de signature ou des éléments d'authentification de l'utilisateur indiquant une clé secrète d'authentification.

Un tel procédé permet ainsi de pouvoir établir, en limitant le risque de fraude et de fragilisation de la sécurité des coffres-forts électroniques, un lien entre des coffres-forts électroniques détenus par un même utilisateur et de mutualiser entre ces coffres, ou au moins certains d'entre eux, des données stockées dans au moins l'un d'entre eux.

Dans un mode de réalisation, l'étape d'authentification comprend une mise en oeuvre d'une authentification forte, à l'aide par exemple d'au moins une clé mémorisée dans un support matériel détenu par l'utilisateur tel qu'une carte à puce, un support USB muni d'un crypto-processeur, ou encore en fonction d'une empreinte biométrique. Cette disposition limite encore le risque de fraude et de fragilisation de la sécurité des coffres-forts électroniques.

Dans un mode de réalisation, le procédé selon l'invention comprend une étape d'affectation à chaque coffre-fort électronique créé d'au moins une fonction de sécurité respective parmi une fonction de chiffrement et/ou une fonction de déchiffrement et/ou une fonction de signature. Au moins une fonction de sécurité affectée au nouveau coffre est choisie égale à une fonction de sécurité affectée au premier coffre. Ceci permet à l'utilisateur d'exploiter de la même façon les données mémorisées dans les deux coffres.

Dans un mode de réalisation, l'accès à un coffre-fort est fonction d'éléments d'authentification de l'utilisateur, affectés à l'utilisateur par le serveur. Les éléments d'authentification pour l'accès au nouveau coffre sont choisis différents de ceux choisis pour l'accès au premier coffre-fort. Ceci permet le cloisonnement des deux coffres-forts. Suivant un second aspect, l'invention propose un programme d'ordinateur comprenant des instructions pour mettre en oeuvre les étapes d'un procédé suivant le premier aspect de l'invention, lors d'une exécution du programme sur un ordinateur.

Suivant un troisième aspect, l'invention propose un serveur de gestion de coffres-forts électroniques pour le compte d'au moins un utilisateur possédant au moins un premier coffre-fort électronique, le serveur comprenant des moyens d'accès conçus pour fournir audit utilisateur un accès, via un deuxième coffre-fort appartenant audit utilisateur, à un ensemble de données faisant partie d'un contenu accessible via le premier coffre-fort électronique, les moyens d'accès étant destinés à être activés en cas d'authentification dudit utilisateur en tant qu'utilisateur propriétaire du premier coffre-fort électronique.

L'invention est définie par les revendications indépendantes.

D'autres caractéristiques et avantages de l'invention apparaîtront encore à la lecture de la description qui va suivre. Celle-ci est purement illustrative et doit être lue en regard des dessins annexés sur lesquels :
- la figure 1 représente un système mettant en oeuvre l'invention dans un mode de réalisation ;
- la figure 2 représente des étapes d'un procédé dans un mode de réalisation de l'invention.

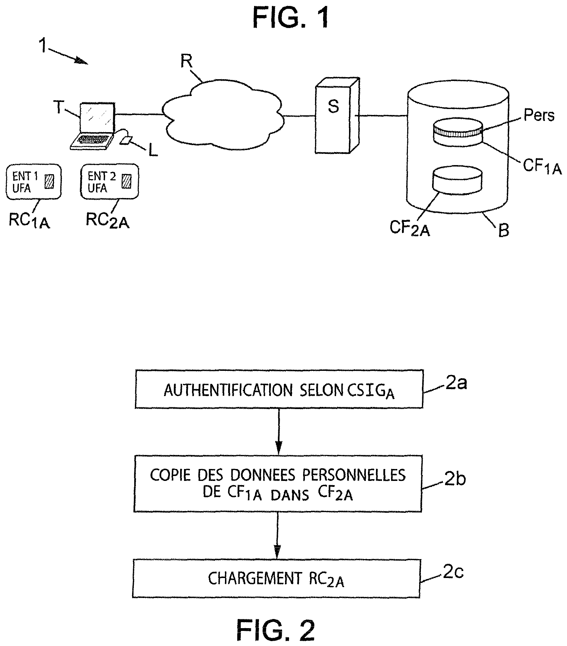

Sur la figure 1 est représenté un système 1 comprenant un serveur S relié, par un réseau de communication R, à une pluralité de terminaux.

Le serveur S comprend une base B de stockage de données utilisée notamment pour le stockage du contenu des coffres-forts électroniques et des données nécessaires à la gestion de ces coffres-forts. Le serveur S est adapté pour offrir à des utilisateurs des services relatifs à l'utilisation de coffres-forts électroniques, par l'intermédiaire des terminaux, du réseau R.

Parmi les terminaux permettant d'accéder à des coffres-forts électroniques figurent par exemple des ordinateurs personnels (« *PC* »), des téléphones mobiles, des assistants personnels, etc.

Sur la figure 1 est notamment représenté le terminal T utilisé par un individu nommé UF_{A}, qui est employé de l'entreprise Ent1. Le terminal T est par exemple un PC, muni d'un écran de visualisation et d'un clavier. Il est en outre doté d'une interface de lecture et d'écriture sur la carte à puce, qu'on nommera ci-dessous lecteur L de carte à puce.

Considérons que l'entreprise Ent1 offre un coffre-fort électronique CF_{1A} à son employé UF_{A}. La création d'un coffre-fort électronique comprend une phase de réservation par l'entreprise Ent1 du coffre-fort électronique CF_{1A} au nom UF_{A} de l'utilisateur, suivie d'une phase d'activation du coffre-fort électronique CF_{1A} par l'employé UF_{A}.

L'entreprise Ent1 a remis à l'employé un module de sécurité matériel, dans le cas présent par exemple une carte à puce RC_{1A}, aux couleurs de l'entreprise Ent1 (comprenant par exemple son logo et son nom).

Cette carte à puce RC_{1A} est utilisée pour, dans la phase d'activation, activer le coffre-fort CF_{1A} et configurer la carte à puce. Elle est utilisée dans les phases d'utilisation du coffre-fort, pour accéder au coffre-fort CF_{1A}, puis y consulter, modifier, supprimer et/ou y stocker des données électroniques.

L'utilisateur UF_{A} se connecte ainsi depuis le terminal T au serveur S par l'intermédiaire du réseau R et indique son souhait d'activer un coffre-fort électronique. La phase d'activation, menée par l'intermédiaire du terminal T et du serveur S, comprend une première étape selon laquelle il est demandé à l'utilisateur d'indiquer son nom et d'indiquer en outre s'il possède ou non déjà un coffre-fort électronique. Dans le cas présent, l'utilisateur répond par la négative à la question. La phase d'activation se poursuit ensuite par l'insertion par l'utilisateur UF_{A} de la carte à puce RC_{1A} dans le lecteur L de carte à puce.

Au cours de la phase d'activation du coffre-fort électronique CF_{1A} par l'utilisateur UF_{A}, sont transmis par le serveur S, puis chargés dans la carte à puce RC_{1A}, un certificat d'authentification CAUT_{1A} et une paire de clés associée (une clé publique et une clé privée), un certificat de signature CSIG_{A} et une paire de clés associée, et un certificat de chiffrement CCHH_{A} et la paire de clés associée.

Ces certificats et les clés associées dédiés à l'utilisateur UF_{A}, pour l'accès et l'utilisation du coffre-fort CF_{1A} et transmis par le serveur S à destination de la carte à puce RC_{1A}, proviennent d'au moins une autorité d'enregistrement et de certification faisant office de tiers de confiance. Dans un mode de réalisation, le serveur S lui-même est ce tiers de confiance.

Le serveur S comprend une liste, dans sa base de données B, permettant d'établir les correspondances entre chaque coffre-fort électronique, le nom de son utilisateur et chacun des certificats CAUT_{1A}, CSIG_{A}, CCHH_{A} et clés associées.

Le coffre-fort CF_{1A} vierge est alors activé.

L'utilisateur UF_{A} a à présent la possibilité d'écrire, de lire et/ou de supprimer des données dans des classeurs de stockage fournis par le coffre-fort électronique CF_{1A}, notamment un classeur destiné à stocker des données personnelles.

Les coordonnées personnelles (nom, adresse, numéros de téléphone, date de naissance, etc.) de l'utilisateur UF_{A} et autres données personnelles sont alors fournies au serveur S depuis le terminal T par l'utilisateur UF_{A}, puis enregistrées dans le classeur de données personnelles du coffre-fort CF_{1A}.

Dans le cas présent, ces coordonnées personnelles et données personnelles « *Pers* » fournies par l'utilisateur sont chiffrées et signées par le terminal T à l'aide des clés respectives de chiffrement et de signature stockées dans la carte à puce RC_{1A}, et associées aux certificats de chiffrement CCHH_{A} et de signature CSIG_{A}. Elles sont ensuite transmises au serveur S, puis stockées sous cette forme dans le classeur CF_{1A}.

Dans un second temps, l'utilisateur UF_{A} se voit offrir un second coffre-fort électronique CF_{2A} par une autre entreprise (sa banque, son assurance) ou administration Ent2, qui réserve donc un coffre-fort électronique CF_{2A} au nom UF_{A} de l'utilisateur et qui remet à l'utilisateur UF_{A} un module de sécurité, dans le cas présent par exemple une carte à puce RC_{2A}.

Des étapes de la phase d'activation du coffre-fort électronique CF_{2A} sont représentées en figure 2.

Afin d'activer le coffre-fort CF_{2A}, l'utilisateur UF_{A} se connecte au moyen du terminal T au serveur S via le réseau R. S'ensuit alors une phase de dialogue via le réseau R entre le serveur S et l'utilisateur par l'intermédiaire du terminal T.

L'utilisateur UF_{A} indique son souhait d'activer un coffre-fort électronique, puis saisit son nom. Lorsqu'il lui est demandé d'indiquer s'il possède déjà un coffre-fort électronique, l'utilisateur UF_{A} répond cette fois par l'affirmative.

Dans une étape 2a de l'utilisateur auprès du serveur S, il est alors requis par le serveur S que l'utilisateur UF_{A} insère la carte à puce associée au coffre-fort électronique déjà détenu par l'utilisateur, en vue de réaliser une étape d'authentification de l'utilisateur auprès du serveur S sur la base d'un élément associé au coffre déjà détenu par l'utilisateur.

Cette authentification est de type authentification forte : elle permet de vérifier l'identité de l'utilisateur sur la base d'au moins deux facteurs parmi ce qu'il sait (mot de passe, code PIN), ce qu'il possède (carte à puce, support USB), ce qu'il est (paramètre biométrique tel qu'empreinte digitale, main, visage, etc.).

Dans le cas présent, l'utilisateur UF_{A} insère la carte à puce RC_{1A} dans le lecteur L de carte à puce.

Le serveur S choisit un aléa (comprenant un nombre aléatoire et d'éventuelles informations connexes), chiffre l'aléa en utilisant la clé publique associée au certificat d'authentification CAUT_{1A} de l'utilisateur UF_{A} et le transmet au terminal T en requérant que le nombre aléatoire, augmenté de 1, lui soit retourné signé par la carte à puce -par exemple au moyen d'une appliquette logée dans la carte à puce- en utilisant la signature utilisée pour le stockage de données dans le coffre-fort électronique CF_{1A}.

Le nombre aléatoire reçu par le terminal T est alors déchiffré au moyen de la clé privée du certificat d'authentification CAUT_{1A}, puis augmenté de 1 et signé au moyen de la clé privée de signature associée au certificat de signature CSIGA. Ces clés privées sont toutes deux stockées dans la carte à puce RC1A. Le terminal T transmet le nombre aléatoire ainsi déchiffré, puis signé au serveur S.

A partir de ce nombre aléatoire augmenté de 1 signé et en fonction de la liste dans la base B fournissant les correspondances entre les coffres-forts électroniques, les certificats d'authentification et clés associées, et les noms des utilisateurs, le serveur S procède à l'authentification de l'utilisateur UF_{A} et identifie également le coffre-fort CF_{1A} correspondant à la signature fournie. En cas d'authentification réussie, le procédé se poursuit à l'étape 2b.

En variante, au lieu d'utiliser la méthode de chiffrement d'un aléa par la clé publique d'authentification, il est possible de procéder à l'authentification de l'utilisateur au moyen d'une clé de session partagée, par exemple de type SSL/TLS, et d'assurer que seul l'utilisateur UF_{A} pourra déchiffrer l'aléa et y répondre suivant la procédure définie.

Quelle que soit la variante choisie, l'étape d'authentification a pour but de s'assurer que seul l'utilisateur UF_{A} propriétaire du premier coffre-fort est en mesure de répondre de manière adéquate. En cas d'authentification réussie, l'étape 2b suivante est exécutée. Dans le cas contraire, le rapprochement entre les deux coffres-forts n'a pas lieu et ceux-ci restent cloisonnés. En particulier, aucun moyen d'accès permettant à l'utilisateur d'accéder via le deuxième coffre-fort CF_{2A} à une partie au moins du contenu du premier coffre-fort CF_{1A} n'est activé ou mis en oeuvre.

A l'étape 2b, le serveur S met en oeuvre des moyens d'accès conçus pour permettre à l'utilisateur d'accéder via le deuxième coffre-fort CF_{2A} à une partie au moins du contenu du premier coffre-fort CF_{1A}. Différentes variantes de mise en oeuvre sont possibles.

Selon une première variante de réalisation, le serveur S copie le contenu *« Pers »* du classeur de données personnelles du coffre-fort électronique CF_{1A} dans le classeur de données personnelles du coffre-fort électronique CF_{2A}. Suivant les modes de réalisation de l'invention, tout ou partie de ces données personnelles sont copiées.

Selon une deuxième variante de réalisation, un module de traitement informatique du serveur S établit un lien logique entre les deux coffres-forts CF_{1A} et CF_{2A} qui partagent alors, en tout ou partie, le contenu « *Pers »* du classeur de données personnelles. Plusieurs modalités de traitements sont envisageables pour établir ce lien logique. Cette deuxième variante évite toute duplication inutile de données.

Toute autre variante est également envisageable, par exemple par utilisation d'outils de gestion électronique de documents permettant de sélectionner, parmi les documents stockés dans une base de données, ceux qui sont visibles et accessibles par un utilisateur.

La phase d'activation se poursuit alors par un message du serveur S adressé à l'utilisateur UF_{A} requérant l'insertion de la carte à puce du coffre-fort à activer dans le lecteur de carte à puce. L'utilisateur UF_{A} remplace donc la carte à puce RC_{1A} par la carte à puce RC_{2A} dans le lecteur L de carte à puce.

Un certificat d'authentification CAUT_{2A} et une paire de clés associée (une clé publique et une clé privée), le certificat de signature CSIG_{A} et la paire de clés associée, et le certificat de chiffrement CCHH_{A} et la paire de clés associée sont alors transmis par le serveur S, puis chargés dans la carte à puce RC_{2A}.

L'utilisateur UF_{A} peut alors procéder au stockage de données électroniques dans le coffre-fort électronique CF_{2A}.

Lors de requêtes d'accès ultérieures au coffre-fort CF_{iA} (i=1 ou 2), l'utilisateur UF_{A} se connectera au serveur S, puis insèrera sa carte à puce RC_{iA} dans le lecteur L de carte à puce. Une fois que le serveur S aura effectivement authentifié l'utilisateur UF_{A} après une phase d'authentification sur la base du certificat d'authentification CAUT_{iA}, l'utilisateur UF_{A} pourra procéder au stockage de nouvelles données électroniques, et/ou à la consultation, modification, suppression de données déjà stockées.

Dans le mode de réalisation décrit ici, le serveur S procède à l'authentification forte de l'utilisateur à l'aide de la signature de ce dernier. Dans un mode de réalisation, l'authentification est réalisée à l'aide de la clé d'authentification associée au certificat d'authentification CAUT_{1A}.

Dans le mode de réalisation décrit de l'étape 2a, l'authentification forte est réalisée notamment à l'aide d'un support matériel (ici une carte à puce) détenu par l'utilisateur. Dans un autre mode de réalisation, elle est réalisée à l'aide d'un élément biométrique (par exemple une empreinte digitale) de l'utilisateur utilisé pour l'accès au coffre CF_{1A} déjà ouvert ou pour la signature des données à stocker dans ce coffre, celui-ci présentant un doigt déterminé à un lecteur relié au terminal pour comparaison de l'empreinte alors capturée avec une empreinte enregistrée dans une base de donnée associée au serveur en vue d'authentifier l'utilisateur.

Dans le mode de réalisation décrit, le cloisonnement entre les coffres-forts CF_{1A} et CF_{2A} est garanti par l'utilisation de certificats d'authentification distincts, servant chacun à déverrouiller l'accès à l'un de ces coffres-forts.

Dans le mode de réalisation décrit, les certificats et clés de signature et de chiffrement associés aux deux coffres-forts CF_{1A} et CF_{2A} sont identiques. Les données signées et/ou chiffrées contenues dans ces coffres-forts sont ainsi directement exploitables par les deux cartes à puce de l'utilisateur.

Dans un autre mode de réalisation, les certificats et clés de signature et de chiffrement associés aux deux coffres-forts CF_{1A} et CF_{2A} sont choisis différents par le serveur, ce qui a pour effet notamment d'augmenter le cloisonnement entre les deux coffres. Dans encore un autre mode de réalisation, dans au moins une des cartes à puce, il n'y a pas de stockage de clés de signature et/ou de chiffrement, c'est-à-dire que les données stockées dans le coffre-fort électronique associé à cette carte à puce ne sont pas chiffrées et/ou pas signées.

Dans un mode de réalisation, on remplace un module de sécurité matériel tel qu'une carte à puce ou un support USB muni d'un crypto-processeur par un module de sécurité logiciel tel qu'une clé USB ou des fichiers logiciels.

Dans un mode de réalisation de l'invention, un rapprochement de deux coffres-forts électronique est effectué a posteriori, c'est-à-dire alors même que les deux coffres-forts ont déjà été créés de manière indépendante.

Dans ce cas, dans un mode de réalisation, l'utilisateur est invité à insérer successivement, en vue d'un rapprochement entre deux coffres, les deux cartes à puce associées à ces deux coffres respectifs et il s'authentifie fortement à l'aide de ces deux supports par exemple à l'aide de ses certificats d'authentification CAUT_{1A}, CAUT_{2A} et/ou certificats de signature CSIG_{1A}, CSIG_{2A}). Il peut alors être procédé au rapprochement des deux coffres-forts, en utilisant des liens logiques entre ces deux coffres dans la base de stockage de données B, selon deux modes de réalisation.

Dans le premier mode de réalisation, l'ensemble des certificats de chiffrement et/ou de signature et les paires de clés associées sont partagés entre les cartes à puce RC_{1A} et RC_{2A} en pratiquant une mise à jour du contenu des cartes à puce. Seuls les certificats d'authentification restent propres à chaque carte à puce, à savoir le certificat CAUT_{1A} pour la carte à puce RC_{1A} et le certificat CAUT_{2A} pour la carte à puce RC_{2A}. Dans ce cas, l'ensemble des informations personnelles est accessible et modifiable quel que soit le support d'authentification utilisé. L'utilisation des certificats de chiffrement et/ou de signature lors des échanges de données entre l'utilisateur et le serveur S est alors supervisée par le serveur S en fonction des zones de stockage des informations.

Dans le deuxième mode de réalisation, aucune modification dans le contenu des cartes à puce n'est effectuée et les certificats et paires de clés installés sur l'une des cartes à puce sont complètement distincts des certificats et paires de clés installés sur l'autre carte à puce. Les données du coffre-fort CF_{1A} sont accessibles en lecture/écriture quand l'utilisateur utilise sa carte à puce RC_{1A} et accessibles en lecture uniquement quand l'utilisateur utilise sa carte à puce RC_{2A}. Réciproquement, les données du coffre-fort CF_{2A} sont accessibles en lecture/écriture quand l'utilisateur utilise sa carte à puce RC_{2A} et accessibles en lecture uniquement quand l'utilisateur utilise sa carte à puce RC_{1A}.

Il est à noter la limitation suivante : les données chiffrées grâce à un certificat et une paire de clés de chiffrement d'une carte à puce ne peuvent pas être déchiffrées/lues quand l'utilisateur accède à son coffre-fort en utilisant l'autre carte à puce. Des solutions de « *transchiffrement »* peuvent alors être proposées suivant des réalisations déjà connues.

Toutes ou partie des étapes mises en oeuvre par le terminal sont effectuées dans un mode de réalisation suite à l'exécution d'instructions de programmes d'ordinateur sur des moyens de calcul du terminal.

Similairement, tout ou partie des étapes mises en oeuvre par le serveur sont effectuées dans un mode de réalisation suite à l'exécution d'instructions de programmes d'ordinateur sur des moyens de calcul du serveur.

La présente invention permet ainsi de faire le lien entre différents coffres-forts appartenant à un même utilisateur, tout en préservant le haut niveau de sécurité requis. Elle consiste à permettre un accès à un même ensemble de données via l'un quelconque des coffres-forts liés.

Ce lien est effectué sous condition d'authentification de l'utilisateur propriétaire des coffres-forts à lier. Cette authentification s'effectue au moyen de données d'authentification, ces données étant par exemple des données donnant accès à un coffre-fort déjà détenu par l'utilisateur, ou des données donnant accès au contenu de ce coffre-fort (déchiffrement), ou toutes autres données d'authentification permettant d'authentifier cet utilisateur en tant qu'utilisateur propriétaire des coffres-forts à lier.

Ces données d'authentification sont obtenues par exemple au moyen d'une ressource cryptographique : la carte à puce RC_{1A}, ou dans d'autres modes de réalisation, un support USB muni d'un crypto-processeur à insérer dans un port, ou encore une empreinte biométrique à valider.

Ce rapprochement permet notamment d'alimenter un nouveau coffre-fort avec les données personnelles enregistrées dans le coffre-fort protégé par la ressource cryptographique insérée. Ces données personnelles sont ainsi mutualisées et ne nécessitent pas de nouvelle saisie de la part de l'utilisateur.

## Revendications

1. Procédé de gestion de coffres-forts électroniques (CF_{1A}, CF_{2A}) mis en oeuvre par un serveur (S) pour le compte d'au moins un utilisateur possédant au moins un premier coffre-fort électronique (CF_{1A}), **caractérisé en ce que** le procédé comporte :
une étape de mise en oeuvre de moyens d'accès conçus pour fournir audit utilisateur un accès, via un deuxième coffre-fort (CF_{2A}) appartenant audit utilisateur, à un ensemble de données (« *Pers* ») faisant partie d'un contenu accessible via le premier coffre-fort électronique (CF_{1A}), ledit accès nécessitant une authentification dudit utilisateur en tant qu'utilisateur propriétaire dudit deuxième coffre-fort et impliquant pour ledit utilisateur la possibilité de consulter, modifier, supprimer et/ou stocker des données électroniques,
ladite étape de mise en oeuvre étant destinée à être exécutée en cas d'authentification dudit utilisateur en tant qu'utilisateur propriétaire du premier coffre-fort électronique (CF_{1A}).

2. Procédé selon la revendication 1, dans lequel ladite étape de mise en oeuvre est exécutée suite à une réception par le serveur (S) d'une requête de création pour ledit utilisateur du deuxième coffre-fort électronique (CF_{2A}).

3. Procédé selon l'une quelconque des revendications 1 à 2, comprenant une étape d'authentification dudit utilisateur au moyen de données d'authentification d'utilisateur utilisées pour authentifier ledit utilisateur en cas de requête d'accès au premier coffre-fort (CF_{1A}).

4. Procédé selon la revendication 3, selon lequel l'étape d'authentification comprend une mise en oeuvre d'une authentification forte.

5. Procédé selon la revendication 3 ou 4, selon lequel lors de l'étape d'authentification, le serveur reçoit des données d'authentification fonction d'au moins une clé stockée dans une ressource cryptographique matérielle (RC_{1A}) affectée à l'utilisateur, et/ou de données biométriques de l'utilisateur.

6. Procédé selon l'une quelconque des revendications 1 à 5, comprenant une étape d'affectation à chaque coffre-fort électronique d'au moins une fonction de sécurité respective parmi une fonction de chiffrement et/ou une fonction de déchiffrement et/ou une fonction de signature, au moins une fonction de sécurité affectée au deuxième coffre (CF_{2A}) étant choisie égale à une fonction de sécurité affectée au premier coffre (CF_{1A}).

7. Procédé selon l'une quelconque des revendications 1 à 6, selon lequel l'accès à un coffre-fort électronique est fonction d'éléments d'authentification de l'utilisateur affectés à l'utilisateur par le serveur (S) et selon lequel les éléments d'authentification (CAUT_{2A}) pour l'accès au deuxième coffre électronique (CF_{2A}) sont choisis différents de ceux (CAUT_{1A}) pour l'accès au premier coffre-fort électronique (CF_{1A}).

8. Programme d'ordinateur comprenant des instructions pour mettre en oeuvre les étapes d'un procédé selon l'une des revendications 1 à 7 lors d'une exécution du programme sur un ordinateur.

9. Serveur (S) de gestion de coffres-forts électroniques (CF_{1A}, CF_{2A}) pour le compte d'au moins un utilisateur possédant au moins un premier coffre-fort électronique (CF_{1A}), **caractérisé en ce que** le serveur comporte :
- des moyens d'accès conçus pour fournir audit utilisateur un accès, via un deuxième coffre-fort (CF_{2A}) appartenant audit utilisateur, à un ensemble de données (« *Pers* ») faisant partie d'un contenu accessible via le premier coffre-fort électronique,
lesdits moyens d'accès étant destinés à être activés en cas d'authentification dudit utilisateur en tant qu'utilisateur propriétaire du premier coffre-fort électronique (CF_{1A}), ledit accès nécessitant une authentification dudit utilisateur en tant qu'utilisateur propriétaire dudit deuxième coffre-fort et impliquant pour ledit utilisateur la possibilité de consulter, modifier, supprimer et/ou stocker des données électroniques.

10. Serveur selon la revendication 9, comprenant des moyens pour effectuer une authentification forte sur réception des données d'identification.

11. Serveur (S) selon la revendication 9 ou 10, comprenant des moyens pour affecter à chaque coffre-fort électronique au moins une fonction de sécurité associée à au moins une clé respective parmi une fonction de chiffrement et/ou une fonction de déchiffrement et/ou une fonction de signature, lesdits moyens étant adaptés pour affecter également au nouveau coffre électronique (CF_{2A}) la fonction de sécurité et la clé associée, affectées au premier coffre électronique (CF_{1A}).

12. Serveur (S) selon l'une quelconque des revendications 9 à 11, l'accès à un coffre-fort électronique étant fonction d'éléments d'authentification de l'utilisateur affectés à l'utilisateur par le serveur, ledit serveur étant adapté pour affecter à l'utilisateur des éléments d'authentification (CAUT_{2A}) pour l'accès au nouveau coffre électronique différents de ceux (CAUT_{1A}) affectés à l'utilisateur pour l'accès au premier coffre-fort électronique.

## Patentansprüche

1. Von einem Server (S) durchgeführtes Verfahren zur Verwaltung von elektronischen Safes (CF_{1A}, CF_{2A}) für das Konto mindestens eines Benutzers, der mindestens einen ersten elektronischen Safe (CF_{1A}) besitzt, **dadurch gekennzeichnet, dass** das Verfahren aufweist:
einen Schritt zur Anwendung von Zugangsmitteln, die konzipiert sind, dem Benutzer über einen zweiten Safe (CF_{2A}), der dem Benutzer gehört, einen Zugang zu einer Datenmenge ("Pers") bereitzustellen, die Teil eines Inhalts ist, der über den ersten elektronischen Safe (CF_{1A}) zugänglich ist, wobei der Zugang eine Authentifizierung des Benutzers als Benutzer-Eigentümer des zweiten Safes benötigt und für den Benutzer die Möglichkeit impliziert, elektronische Daten einzusehen, zu ändern, zu löschen und/oder zu speichern,
wobei der Anwendungsschritt vorgesehen ist, in dem Fall, dass der Benutzer als Benutzer-Eigentümer des ersten elektronischen Safes (CF_{1A}) authentifiziert ist, ausgeführt zu werden.

2. Verfahren nach Anspruch 1, in welchem der Anwendungsschritt ausgeführt wird, nachdem der Server (S) eine Schaffungsanfrage für den Benutzer des zweiten elektronischen Safes (CF_{2A}) empfangen hat.

3. Verfahren nach einem der Ansprüche 1 bis 2, aufweisend einen Schritt zum Authentifizieren des Benutzers mithilfe von Benutzerauthentifizierungsdaten, die zum Authentifizieren des Benutzers verwendet werden, im Fall einer Anfrage zum Zugang zu dem ersten Safe (CF_{1A}).

4. Verfahren nach Anspruch 3, gemäß welchem der Authentifizierungsschritt eine Durchführung einer starken Authentifizierung aufweist.

5. Verfahren nach Anspruch 3 oder 4, gemäß welchem in dem Authentifizierungsschritt der Server Authentifizierungsdaten abhängig von mindestens einem Schlüssel, der in einer dem Benutzer bereitgestellten materiellen kryptographischen Ressource (RC_{1A}) gespeichert ist und/oder von biometrischen Daten des Benutzers empfängt.

6. Verfahren nach einem der Ansprüche 1 bis 5, aufweisend einen Schritt zur Zuteilung jedem elektronischen Safe mindestens eine jeweilige Sicherheitsfunktion, darunter eine Verschlüsselungsfunktion und/oder eine Entschlüsselungsfunktion und/oder eine Signaturfunktion, wobei mindestens eine dem zweiten Safe (CF_{2A}) zugeteilte Sicherheitsfunktion gewählt wird, um gleich einer dem ersten Safe (CF_{1A}) zugeteilten Sicherheitsfunktion zu sein.

7. Verfahren nach einem der Ansprüche 1 bis 6, gemäß welchem der Zugang zu einem elektronischen Safe abhängig von Authentifizierungselementen des Benutzers ist, die dem Benutzer von dem Server (S) zugeteilt sind, und gemäß welchem die Authentifizierungselemente (CAUT_{2A}) für den Zugang zu dem zweiten elektronischen Safe (CF_{2A}) gewählt werden, um sich von denjenigen (CAUT_{1A}) für den Zugang zu dem ersten elektronischen Safe (CF_{1A}) zu unterscheiden.

8. Computerprogramm aufweisend Befehle zum Durchführen der Schritte eines Verfahrens nach einem der Ansprüche 1 bis 7, wenn das Programm auf einem Computer ausgeführt wird.

9. Server (S) zur Verwaltung von elektronischen Safes (CF_{1A}, CF_{2A}) für das Konto mindestens eines Benutzers, der mindestens einen ersten elektronischen Safe (CF_{1A}) besitzt, **dadurch gekennzeichnet, dass** der Server aufweist:
- Zugangsmittel, die konzipiert sind, dem Benutzer über einen zweiten Safe (CF_{2A}), der dem Benutzer gehört, einen Zugang zu einer Datenmenge ("Pers") bereitzustellen, die Teil eines Inhalts ist, der über den ersten elektronischen Safe (CF_{1A}) zugänglich ist,
wobei die Zugangsmittel vorgesehen sind, in dem Fall, dass der Benutzer als Benutzer-Eigentümer des ersten elektronischen Safes (CF_{1A}) authentifiziert ist, aktiviert zu werden, wobei der Zugang eine Authentifizierung des Benutzers als Benutzer-Eigentümer des zweiten Safes benötigt und für den Benutzer die Möglichkeit impliziert, elektronische Daten einzusehen, zu ändern, zu löschen und/oder zu speichern.

10. Server nach Anspruch 9, aufweisend Mittel zum Durchführen einer starken Authentifizierung auf Empfang von Identifikationsdaten.

11. Server (S) nach Anspruch 9 oder 10, aufweisend Mittel, um jedem elektronischen Safe mindestens eine Sicherheitsfunktion zuzuteilen, die mit mindestens einem jeweiligen Schlüssel verknüpft ist, darunter eine Verschlüsselungsfunktion und/oder eine Entschlüsselungsfunktion und/oder eine Signaturfunktion, wobei die Mittel angepasst sind, auch dem neuen elektronischen Safe (CF_{2A}) die Sicherheitsfunktion und den zugehörigen Schlüssel zuzuteilen, die dem ersten elektronischen Safe (CF_{1A}) zugeteilt sind.

12. Server (S) nach einem der Ansprüche 9 bis 11, wobei der Zugang zu einem elektronischen Safe abhängig ist von Authentifizierungselementen des Benutzers, die dem Benutzer von dem Server (S) zugeteilt sind, wobei der Server angepasst ist, dem Benutzer Authentifizierungselemente (CAUT_{2A}) für den Zugang zu dem neuen elektronischen Safe zuzuteilen, die sich von denjenigen (CAUT_{1A}) unterscheiden, die dem Benutzer für den Zugang zu dem ersten elektronischen Safe zugeteilt sind.

## Claims

1. A method of managing electronic safes (CF_{1A}, CF_{2A}) implemented by a server (S) on behalf of at least one user possessing at least a first electronic safe (CF_{1A}), **characterized in that** the method comprises:
a step of implementing access means designed to provide said user with access, via a second safe (CF_{2A}) belonging to said user, to a set of data ("*Pers*") forming part of a content accessible via the first electronic safe (CF_{1A}), said access requiring an authentication of said user as user to whom said second safe belongs, which implies that said user can read, modify, delete and/or store electronic data,
said step of implementing access means being intended to be carried out in case of an authentication of said user as the user owning the first electronic safe (CF_{1A}).

2. The method of claim 1, wherein said step of implementing access means is carried out upon reception by the server (S) of a request for creating, for said user, the second electronic safe (CF_{2A}).

3. The method of any one of claims 1 or 2, comprising a step of authenticating said user by means of user authentication data used for authenticating said user in case of a request for access to the first safe (CF_{1A}).

4. The method of claim 3, wherein the authentication step comprises implementing a strong authentication.

5. The method of any one of claims 3 or 4, wherein, during the authentication step, the server receives authentication data that are a function of at least one key stored in a hardware cryptographic resource (RC_{1A}) allocated to the user, and/or biometric data of the user.

6. The method of any one of claims 1 to 5, comprising a step of allocating to each electronic safe at least one respective security function among an encryption function and/or a decryption function and/or a signature function, at least one security function allocated to the second safe (CF_{2A}) being chosen equal to a security function allocated to the first safe (CF_{1A}).

7. The method of any one of claims 1 to 6, wherein access to an electronic safe is a function of authentication items of the user, allocated to the user by the server (S) and according to which the authentication items (CAUT_{2A}) for access to the second electronic safe (CF_{2A}) are chosen different from those (CAUT_{1A}) for access to the first electronic safe (CF_{1A}).

8. A computer program comprising instructions for carrying out the steps of a method according to any of claims 1 to 7 when the computer program is run on a computer.

9. A server (S) for managing electronic safes (CF_{1A}, CF_{2A}) on behalf of at least one user possessing at least a first electronic safe (CF_{1A}), **characterized in that** the server comprises:
- access means designed to provide said user with access, via a second safe (CF_{2A}) belonging to said user, to a set of data ("*Pers*") forming part of a content accessible via the first electronic safe (CF_{1A}),
said access means being intended to be activated in case of an authentication of said user as the user owning the first electronic safe (CF_{1A}), said access requiring an authentication of said user as user to whom said second safe belongs, which implies that said user can read, modify, delete and/or store electronic data.

10. The server of claim 9, comprising means for carrying out a strong authentication upon reception of identification data.

11. The server (S) of any one of claims 9 or 10, comprising means for allocating to each electronic safe at least one security function associated with at least one respective key among an encryption function and/or a decryption function and/or a signature function, said means being adapted to also allocate to the new electronic safe (CF_{2A}) the security function and the associated key assigned to the first electronic safe (CF_{1A}).

12. The server (S) of any one of claims 9 to 11, wherein access to an electronic safe is a function of authentication items of the user allocated to the user by the server, said server being adapted to allocate to the user authentication items (CAUT_{2A}) for access to the new electronic safe different from those (CAUT_{1A}) allocated to the user for access to the first electronic safe.
